# EUROPÄISCHE PATENTANMELDUNG

(11) **EP 1 914 105 A2**
(43) Veröffentlichungstag der Anmeldung: **23.04.2008**
(21) Anmeldenummer: 07017334.9
(22) Anmeldetag: 05.09.2007
(51) Int. Cl.: B60K 17/344, F16H 3/00

(54) **Allrad-Antriebsstrang für ein Kraftfahrzeug**

(30) Priorität: 20.10.2006 DE 102006050972
(71) Anmelder: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Nett, Hans-Peter, 53518 Adenau (DE); Zacher, Tobias, 99869 Mühlberg (DE); Eichhorn, Wolfgang, 71726 Benningen (DE)
(74) Vertreter: Steil, Christian

(57) **Zusammenfassung**

Es wird vorgeschlagen, ein Allrad-Antriebsstrang (11) für ein Kraftfahrzeug (10), das wenigstens zwei angetriebene Achsen (HA, VA) aufweist, mit einem Kennungswandlungsgetriebe (16) in Längsbauweise, dem eingangsseitig Antriebsleistung zugeführt wird, das zur Umwandlung einer Charakteristik eines Antriebsmotors (12) dient und das ausgangsseitig mit einer Verteilereinrichtung (64) verbunden ist, mittels der die Antriebsleistung auf die zwei Achsen (HA, VA) verteilt werden kann, wobei das Kennungswandlergetriebe (16) eine Abtriebswelle (20), die mit einer ersten Antriebswelle (22) für die erste Achse verbunden ist, und eine hierzu parallele Vorgelegewelle (46) aufweist, wobei die Abtriebswelle (20) und die Vorgelegewelle (46) mittels einer ersten konstanten Übersetzung (52) miteinander verbunden sind, und wobei die Vorgelegewelle (46) mittels einer zweiten konstanten Übersetzung (54) mit einer zweiten Antriebswelle (26) für die zweite Achse (VA) verbunden ist.

Dabei ist die Verteilereinrichtung (64) koaxial zu der zweiten Antriebswelle (26) angeordnet.

## Beschreibung

Die vorliegende Erfindung betrifft einen Allrad-Antriebsstrang für ein Kraftfahrzeug, das wenigstens zwei angetriebene Achsen aufweist, mit einem Kennungswandlergetriebe in Längsbauweise, dem eingangsseitig Antriebsleistung zugeführt wird, das zur Umwandlung einer Charakteristik eines Antriebsmotors dient und das ausgangsseitig mit einer Verteilereinrichtung verbunden ist, mittels der die Antriebsleistung auf die zwei Achsen verteilt werden kann, wobei das Kennungswandlergetriebe eine Abtriebswelle, die mit einer ersten Antriebswelle für die erste Achse verbunden ist, und eine hierzu parallele Vorgelegewelle aufweist, wobei die Abtriebswelle und die Vorgelegewelle mittels einer ersten konstanten Übersetzung miteinander verbunden sind, und wobei die Vorgelegewelle mittels einer zweiten konstanten Übersetzung mit einer zweiten Antriebswelle für die zweite Achse verbunden ist.

Ein derartiger Allrad-Antriebsstrang ist bekannt aus dem Dokument DE 102 53 259 A1.

In dem genannten Dokument ist ein Verbrennungsmotor mit einem Eingang einer Doppelkupplungsanordnung verbunden. Der Ausgang der Doppelkupplungsanordnung ist mit einem Doppelkupplungsgetriebe verbunden, das eine Eingangswellenanordnung, eine Vorgelegewelle und wenigstens einen Getriebeabtrieb aufweist, der nicht koaxial zu der wenigstens einen Getriebeeingangswelle ausgerichtet ist. Das Doppelkupplungsgetriebe ist als Vorgelegegetriebe ausgebildet.

In einer Ausführungsform ist die Vorgelegewelle mit der Abtriebswelle über einen Abtriebskonstantenradsatz verbunden. Die Abtriebswelle ist mit einer ersten Antriebswelle für eine Hinterachse verbunden. Ferner ist an der Vorgelegewelle ein Losrad gelagert, das mittels einer Verteilereinrichtung in Form einer Zuschaltkupplung mit der Vorgelegewelle verbindbar ist. Das Losrad steht in Zahneingriff mit einem weiteren Rad, das mit einer zweiten Antriebswelle für die zweite Achse (Vorderachse) verbunden ist. Die zweite Antriebswelle ist mit einem Front-Querdifferential verbunden.

Ferner ist aus dem Dokument EP 1 321 327 A2 ein längs eingebauter Antriebsstrang für ein Kraftfahrzeug bekannt, bei welchem mittels eines Verteilergetriebes ein Antriebsmoment zum einen auf eine Hinterachse und zum anderen über eine winklig zur Antriebsstranglängsachse angeordnete Gelenkwelle auf eine Vorderachse übertragbar ist. Dabei erfolgt die Übertragung vom Verteilergetriebe auf die Gelenkwelle über ein Antriebsritzel und ein Abtriebsritzel, wobei ein Kreuzgelenk der Gelenkwelle zumindest teilweise innerhalb des Abtriebsritzels angeordnet ist.

Hierbei soll es möglich sein, ein für einen Heckantrieb konzipiertes Kraftfahrzeuggetriebe derart zu erweitern, dass ein weiterer Abtrieb zu einem Vorderachsdifferential möglich ist.

Ferner ist es aus dem Dokument ATZ Automobiltechnische Zeitschrift, Ausgabe 2, 2004, Jahrgang 106, Seiten 92 bis 98 bekannt, an den Getriebeausgang eines herkömmlichen manuellen Schaltgetriebes ein Verteilergetriebe anzuflanschen, das einen starren Abtrieb zur Hinterachse aufweist. Ferner ist koaxial zu der Abtriebswelle eine Zuschaltkupplung angeordnet, die über eine Hohlwelle und einen Kettentrieb mit einer Antriebswelle für die Vorderachse verbindbar ist.

Ein solches separates Verteilergetriebe benötigt ein großes Gewicht und einen großen Bauraum. Ferner ist eine relativ große Anzahl von Zahneingriffen erforderlich. Auch die Gewichtsverteilung im Antriebsstrang ist nicht besonders günstig.

Vor diesem Hintergrund ist es die Aufgabe der Erfindung, einen verbesserten Allrad-Antriebsstrang für Kraftfahrzeuge anzugeben, der insbesondere axial kompakt baut und ein vergleichsweise geringes Gewicht besitzt.

Diese Aufgabe wird bei dem eingangs genannten Allrad-Antriebsstrang dadurch gelöst, dass die Verteilereinrichtung koaxial zu der zweiten Antriebswelle angeordnet ist.

Durch diese Maßnahme kann die Verteilereinrichtung beispielsweise an dem zur Hinterachse weisenden Ende der zweiten Antriebswelle angeordnet sein, in einem Bereich, wo die Verteilereinrichtung räumlich nicht in Konflikt steht mit dem Abtrieb zur Hinterachse. Ferner ist eine Integration der Verteilereinrichtung in das Kennungswandlergetriebe möglich.

Das erfindungsgemäße Kennungswandlergetriebe kann ein Vorgelegegetriebe wie ein manuelles Schaltgetriebe, ein automatisiertes Schaltgetriebe, ein Doppelkupplungsgetriebe, etc. sein. Das Kennungswandlergetriebe kann jedoch auch ein Automatikgetriebe wie ein Wandlerautomatgetriebe, ein CVT-Getriebe, ein Toroidgetriebe, etc. sein.

Die Aufgabe wird somit vollkommen gelöst.

Von besonderem Vorteil ist es, wenn die Verteilereinrichtung dazu ausgelegt ist, Antriebsleistung immer zu der ersten der zwei Achsen und variabel mittels einer Zuschaltkupplung zu der zweiten Achse zu übertragen, wobei die Zuschaltkupplung koaxial zu der zweiten Antriebswelle angeordnet ist.

Generell kann die Verteilereinrichtung zwar auch durch ein Verteilergetriebe gebildet sein, wie beispielsweise einen Planetenradsatz oder ähnliches. Besonders bevorzugt ist es jedoch, wenn die Verteilereinrichtung als eine Zuschaltkupplung realisiert ist, die bei Bedarf (variabel) Antriebsleistung auf die zweite Achse (in der Regel die Vorderachse) leitet. Bei einem derartigen Getriebe kann das Verhältnis der Verteilung der Antriebsleistung auf die Hinterachse und die Vorderachse im Bereich von 100% : 0% bis zu 0% : 100% betragen.

Funktional entspricht ein solcher Allrad-Antriebsstrang dem Allrad-Konzept, wie es in dem oben genannten ATZ-Dokument genannt wurde.

Im Bereich des Abtriebs ist zwischen der Vorgelegewelle und der Abtriebswelle eine konstante Übersetzung eingerichtet. Ferner ist zwischen der Vorgelegewelle und der zweiten Antriebswelle eine konstante Übersetzung eingerichtet.

Von besonderem Vorzug ist es daher, wenn das Kennungswandlergetriebe als Stufenwechselgetriebe in Vorgelegebauweise ausgebildet ist, wobei die erste konstante Übersetzung durch einen ersten Abtriebskonstantenradsatz des Stufenwechselgetriebes gebildet ist.

Im Gegensatz zu herkömmlichen Stufenwechselgetrieben, die einen Antriebskonstantenradsatz aufweisen, ist zwischen der Abtriebswelle und der Vorgelegewelle mittels des ersten Abtriebskonstantenradsatzes eine erste konstante Übersetzung eingerichtet, so dass die Vorgelegewelle generell proportional zur Abtriebswellendrehzahl dreht. Bei diesem Konzept können die über die einzelnen Radsätze der verschiedenen Gangstufen übertragenen Drehmomente geringer gehalten werden, so dass die einzelnen Radsätze jeweils schmaler ausgebildet werden können. Lediglich im Bereich des ersten Abtriebskonstantenradsatzes ist für eine stabile Lagerung zu sorgen.

Gemäß einer weiteren bevorzugten Ausführungsform weist die Zuschaltkupplung ein Eingangsglied auf, das mit einer Zwischenwelle verbunden ist, die zu der zweiten Antriebswelle konzentrisch ausgebildet ist, und weist ein Ausgangsglied auf, das mit der zweiten Antriebswelle verbunden ist.

Auf diese Weise kann die Zuschaltkupplung beispielsweise als klassische Lamellenkupplung ausgeführt sein, die ein Eingangsglied und ein hierzu konzentrisches Ausgangsglied aufweist.

Von besonderem Vorteil ist es dabei, wenn die Zwischenwelle als Hohlwelle ausgebildet ist. In diesem Fall ist es möglich, dass die Zuschaltkupplung am axial äußersten Ende der zweiten Antriebswelle angeordnet ist, so dass insgesamt eine kompakte radiale Bauweise erzielbar ist.

Generell ist es zwar möglich, die konstante Übersetzung zwischen der Vorgelegewelle und der zweiten Antriebswelle über beliebige Mittel, wie beispielsweise einen Kettentrieb zu realisieren.

Besonders bevorzugt ist es jedoch, wenn die zweite konstante Übersetzung durch einen zweiten Abtriebskonstantenradsatz gebildet ist.

Hierbei ist es von besonderem Vorzug, wenn der zweite Abtriebskonstantenradsatz wenigstens ein Beveloidrad aufweist, so dass die zweite Antriebswelle schräg zu der Vorgelegewelle angeordnet sein kann.

Dies ist insbesondere dann vorteilhaft, wenn die zweite Antriebswelle außerhalb eines Gehäuses des Kennungswandlergetriebes verlaufen soll. Ferner kann so erreicht werden, dass die zweite Antriebswelle über lediglich ein Gleichlaufgelenk mit einem Achsgetriebe für die zweite Achse verbindbar ist.

Vorteilhaft ist es insgesamt auch, wenn die erste und die zweite Übersetzung gleich groß sind.

In diesem Fall können die Übersetzungen von Achsgetrieben an den zwei Achsen ebenfalls gleich groß sein.

Sofern die erste und die zweite Übersetzung unterschiedlich sind, sollte ein derartiger Übersetzungsunterschied durch unterschiedlich Übersetzungsverhältnisse der Achsgetriebe ausgeglichen werden.

Insgesamt ist es ferner vorteilhaft, wenn Mittel zur Einrichtung der zweiten Übersetzung (wie beispielsweise der zweite Abtriebskonstantenradsatz) und/oder die Verteilereinrichtung (wie beispielsweise die Zuschaltkupplung) in einem Gehäuse des Kennungswandlergetriebes aufgenommen sind.

Dies ermöglicht, sämtliche Komponenten des Antriebsstranges bis auf die zwei Antriebswellen hin zu den Achsgetrieben im Wesentlichen in einem Gehäuse aufzunehmen. Hierdurch kann Gewicht eingespart werden. Ferner kann ein gemeinsamer Ölhaushalt für das Kennungswandlergetriebe und für das Verteilergetriebe vorgesehen werden.

Gemäß einer weiteren bevorzugten Ausführungsform sind die Mittel zur Einrichtung der zweiten Übersetzung in einem zur ersten Achse weisenden Deckel des Gehäuses des Kennungswandlergetriebes aufgenommen.

Dies ermöglicht zum einen eine günstige Montage und zum anderen die vergleichsweise einfache Anbindung an Aktuatormittel, sofern die Verteilereinrichtung variabel ansteuerbar ist. (bei einer Zuschaltkupplung über den Schlupfzustand bzw. bei einem differentialgesteuerten Verteilergetriebe beispielsweise über die Ansteuerung einer Längssperrkupplung).

Ferner ist es vorteilhaft, wenn Aktuatormittel zur Betätigung der Verteilereinrichtung sich an einem zur ersten Achse weisenden Deckel eines Gehäuses des Kennungswandlergetriebes abstützen.

Ferner ist es vorteilhaft, wenn die zweite Antriebswelle außerhalb eines Gehäuses des Kennungswandlergetriebes verläuft. Hierbei kann das Kennungswandlergetriebe für den reinen Hinterachsantrieb ausgelegt, aber auch für Allradantrieb auf einfache Weise modifiziert werden.

Dabei ist es von besonderem Vorteil, wenn die zweite Achse ein Achsgetriebe zur Verteilung der Antriebsleistung auf zwei Räder der zweiten Achse aufweist, das mit der zweiten Antriebswelle verbunden ist, wobei das Achsgetriebe ein von dem Gehäuse des Kennungswandlergetriebes getrenntes Gehäuse aufweist und wobei die Gehäuse gemeinsam an einem Chassis des Kraftfahrzeuges bzw. am Antriebsstrang festgelegt sind.

Hierdurch kann verhindert werden, dass die außenliegende zweite Antriebswelle zu große Winkelbewegungen durchführt. Insbesondere können Achsverschränkungen im Betrieb und damit ein zu großes Winkelspiel der zweiten Abtriebswelle vermieden werden.

Gemäß einer insgesamt bevorzugten Ausführungsform weist die zweite Antriebswelle an ihrem der Verteilereinrichtung zugeordneten Ende einen rundlichen Vorsprung auf, mittels dessen sich die zweite Antriebswelle axial in Bezug auf ein Gehäuse der Verteilereinrichtung (z.B. ein Gehäuse des Kennungswandlergetriebes) abstützt.

Durch diese Maßnahme können etwaige Fertigungstoleranzen, die eine veränderte Winkellage der zweiten Antriebswelle verursachen können, ausgeglichen werden.

Vorzugsweise ist die zweite Antriebswelle oder eine damit verbundene Zwischenwelle ferner durch ein Zentrierlager winkelbeweglich zentriert und auch dies kann zum Ausgleich von Fertigungstoleranzen bzw. zum Ausgleich eines Winkelversatzes aufgrund der relativ langen Distanz zu dem vorderen Achsgetriebe dienen.

Insgesamt wird mit dem erfindungsgemäßen Allrad-Antriebsstrang in den verschiedenen Ausführungsformen jeweils wenigstens einer der folgenden Vorteile erzielt: geringes Gewicht; kompakte Bauweise; kleinerer Platzbedarf; wenig Zahneingriffe zum Antrieb der zweiten Achse; hoher Wirkungsgrad; kleine Masse am Getriebeende und kleines Gesamtgewicht; Antrieb zur Vorderachse weit nach vorne verlegt und damit axial kompakte Bauweise; kürzere Antriebswelle zum Vorderachsgetriebe; Anhebung der Biegeeigenfrequenzen, so dass der Abstand der Resonanzfrequenz zur Erregerfrequenz größer wird; wenig Schnittstellen durch Entfall eines separaten Verteilergetriebes; wenig Betreuungsaufwand und Erprobungsaufwand, da für unterschiedliche Varianten (Hinterradantrieb, Allradantrieb) nur ein Antriebsstrang zu entwickeln und zu erproben ist; geringer Logistik- und Montageaufwand; Verwendung des Allrad-Konzeptes sowohl für Schaltgetriebe (manuell oder automatisiert), als auch für Doppelkupplungsgetriebe; durch Wegfall des separaten Verteilergetriebes kann die Gelenkwellenschnittstelle zur Hinterachse zwischen reinem Heckantrieb und Allradantrieb gleich bleiben.

Die Zuschaltkupplung kann vorzugsweise hydraulisch betätigt werden; es ist jedoch auch eine elektromechanische Betätigung denkbar.

Die hydraulische Betätigung kann durch einen separaten Aktuator erfolgen, der beispielsweise eigene Druckerzeugungsmittel aufweist, oder durch Nutzung einer Druckquelle, die ohnehin zur Betätigung eines automatisierten, vorgeschalteten Getriebes (Kennungswandlergetriebe) vorhanden ist.

Ferner versteht sich, dass die Zuschaltkupplung elektronisch gesteuert bzw. geregelt werden kann, eingebunden in eine übergeordnete Steuer- und Regelstrategie für den Antriebsstrang, um gegebenenfalls das Fahrverhalten aktiv zu beeinflussen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einer ersten Ausführungsform eines erfindungsgemäßen Antriebsstranges;
- Fig. 2: eine Detailansicht einer beispielhaften Konstruktion des Abtriebsabschnittes (Verteilereinrichtung) des Antriebsstranges der Fig. 1;
- Fig. 3: eine alternative Ausführungsform eines Antriebsstranges gemäß der vorliegenden Erfindung; und
- Fig. 4: eine schematisierte perspektivische Ansicht des hinteren Teils eines erfindungsgemäßen Antriebsstranges mit Darstellung der Anbindungsmöglichkeit einer Kardanwelle und einer Darstellung einer außenliegenden schrägen Welle hin zu einem Vorderachsdifferential.

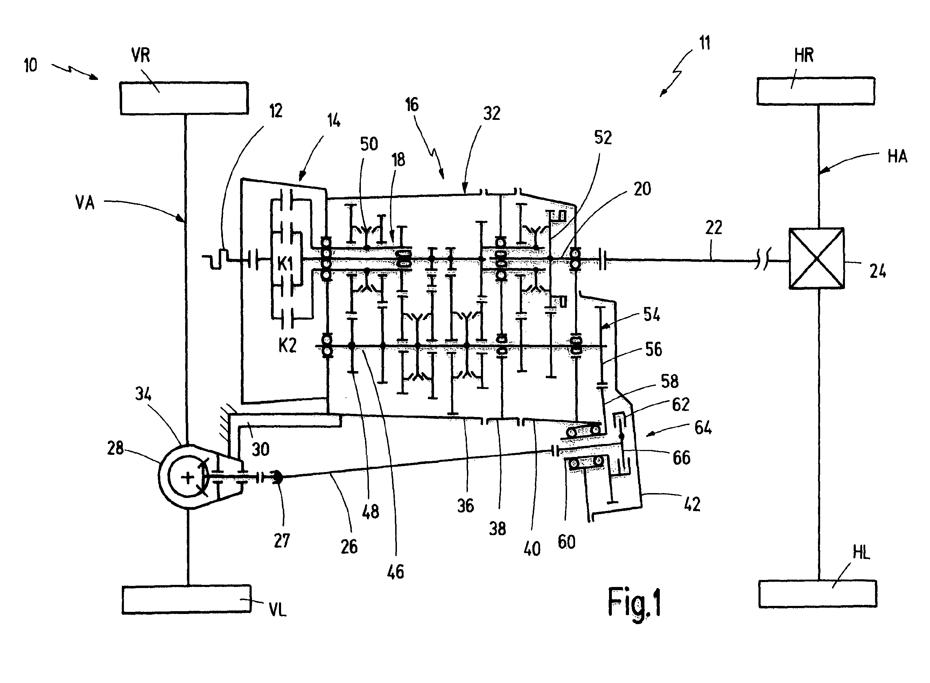

In Fig. 1 ist ein allradgetriebenes Kraftfahrzeug generell mit 10 bezeichnet. Das Kraftfahrzeug 10 weist eine Vorderachse VA mit Vorderrädern VL, VR und eine Hinterachse HA mit Hinterrädern HL, HR auf.

Das Kraftfahrzeug 10 beinhaltet ferner einen Antriebsstrang 11 zum Antreiben beider Achsen VA, HA. Der Antriebsstrang 11 beinhaltet einen Antriebsmotor, wie einen Verbrennungsmotor 12, eine mit dem Antriebsmotor 12 verbundene Kupplungsanordnung und ein hiermit verbundenes Stufenwechselgetriebe 16.

Im vorliegenden Fall ist das Stufenwechselgetriebe 16 als Doppelkupplungsgetriebe ausgebildet, wobei die Kupplungsanordnung 14 eine erste Kupplung K1 und eine zweite Kupplung K2 aufweist.

Die Kupplungen K1, K2 sind mit einer Eingangswellenanordnung 18 aus einer Innenwelle und einer Hohlwelle verbunden, die mit zwei getrennten Teilgetrieben des Stufenwechselgetriebes 16 verbunden sind. In an sich bekannter Weise beinhaltet ein Teilgetriebe gerade Gangstufen und das andere Teilgetriebe ungerade Gangstufen des Stufenwechselgetriebes 16.

Eine Abtriebswelle 20 des Stufenwechselgetriebes 16 ist bei 20 dargestellt. Das Stufenwechselgetriebe 16 ist generell längs in das Kraftfahrzeug 10 eingebaut und die Abtriebswelle 20 erstreckt sich hin zur Hinterachse und ist mit einer ersten Antriebswelle 22 (Kardanwelle) verbindbar, die ein Hinterachs-Querdifferential 24 zur Verteilung von Antriebsmoment auf die Hinterräder HL, HR antreibt.

Ferner wird die Vorderachse VA über eine zweite Antriebswelle 26 angetrieben, die über ein Gleichlaufgelenk 27 mit einem Vorderachs-Querdifferential 28 verbunden ist.

Ein Chassis des Kraftfahrzeuges ist in Fig. 1 generell mit 30 bezeichnet. Ein Gehäuse 32 des Stufenwechselgetriebes 16 und ein Gehäuse 34 des Vorderachs-Querdifferentials 28 sind gemeinsam an dem Chassis 30 festgelegt. Hierdurch kann erreicht werden, dass eine vergleichsweise stabile Winkellage zwischen dem Gehäuse 32 und dem Gehäuse 34 erzielbar ist. Achsverschränkungen, wie sie bei einem freien Achsschemel möglich wären, werden somit verhindert.

Das Gehäuse 32 des Stufenwechselgetriebes 16 weist einen Gehäusetopf 36 auf, dessen Boden hin zu der Kupplungsanordnung 14 weist. Der Boden des Gehäusetopfes 36 ist von der Eingangswellenanordnung 18 durchsetzt. Das Gehäuse 32 weist ferner ein Lagerschild 38 und einen zur Hinterachse HA weisenden Gehäusedeckel 40 auf. An dem Gehäusedeckel 40 ist ferner ein Außendeckel 42 aufgesetzt. Die zweite Antriebswelle 26 erstreckt sich aus einem radial vorstehenden Abschnitt des Gehäusedeckels 40 in Richtung hin zur Vorderachse VA. Die zweite Antriebswelle 26 läuft außerhalb des Gehäuses 32 des Stufenwechselgetriebes 16 und verläuft schräg zu einer Längsachse des Antriebsstranges 11, wie sie beispielsweise durch die Eingangswellenanordnung 18 und die Abtriebswelle 20 definiert ist.

Das Stufenwechselgetriebe 16 beinhaltet eine zu der Eingangswellenanordnung 18 parallele Vorgelegewelle, wobei eine Mehrzahl von Radsätzen 48 entsprechend unterschiedlicher Gangstufen an der Eingangswellenanordnung 18 bzw. der Vorgelegewelle 46 gelagert sind. Die Radsätze 48 (von denen in Fig. 1 aus Gründen einer übersichtlichen Darstellung nur einer mit dem Bezugszeichen versehen ist) werden über an sich bekannte Schaltkupplungen (z.B. Synchronkupplungen) in den Leistungsfluss geschaltet. Ein entsprechendes Schaltkupplungspaket ist in Fig. 1 bei 50 dargestellt.

Die Vorgelegewelle 46 und die koaxial mit der Eingangswellenanordnung 18 ausgerichtete Abtriebswelle 20 sind über einen ersten Abtriebskonstantenradsatz 52 miteinander verbunden. Mit anderen Worten dreht sich die Vorgelegewelle immer mit einer Drehzahl proportional zur Drehzahl der Abtriebswelle 20.

Ferner ist die Vorgelegewelle 46 über einen zweiten Abtriebskonstantenradsatz 54 mit einer Zwischenwelle 60 verbunden, die etwa koaxial zu der zweiten Antriebswelle 26 ausgerichtet ist. Genauer gesagt beinhaltet der zweite Abtriebskonstantenradsatz 54 ein erstes Zahnrad 56, das fest mit der Vorgelegewelle 46 verbunden ist, und ein zweites Zahnrad 58. Die Zahnräder 56, 58 beinhalten eine Beveloidverzahnung, so dass die Zwischenwelle 60 schräg zu der Vorgelegewelle 46 ausgerichtet sein kann.

Die Zwischenwelle 60 ist mittels einer nicht näher bezeichneten Lageranordnung an dem Gehäusedeckel 40 drehbar gelagert und ist mit einem Eingangsglied 62 einer Zuschaltkupplung 64 verbunden. Das Eingangsglied 62 ist auf der zur Hinterachse HA weisenden Seite des zweiten Zahnrades 58 angeordnet und beispielsweise als Außenlamellenträger ausgeführt. Ein Ausgangsglied 62 der Zuschaltkupplung 64 ist mit einem Innenlamellenträger ausgebildet und ist drehbar innerhalb der Zwischenwelle 60 gelagert, die als Hohlwelle ausgeführt ist. Das Ausgangsglied 66 ist mit der zweiten Antriebswelle 26 koaxial ausgerichtet und drehfest verbunden.

Die Zuschaltkupplung 64 ist beispielsweise im Normalfall geöffnet, so dass Antriebsleistung ausschließlich über die erste Antriebswelle 22 zu der Hinterachse HA übertragen wird. Sofern Antriebsleistung auch zu der Vorderachse VA übertragen werden soll, wird die Zuschaltkupplung 64 nach Bedarf geschlossen. Bei geschlossener Zuschaltkupplung 64 wird die Antriebsleistung des Antriebsmotors 12 im Verhältnis 50% : 50% auf die zwei Achsen HA, VA verteilt. Durch Regelung der Zuschaltkupplung 64 kann das Verhältnis der Verteilung der Antriebsleistung auf die zwei Achsen HA, VA demzufolge nach Bedarf variiert werden.

Durch die Anordnung der Zuschaltkupplung 64 koaxial zu der zweiten Antriebswelle 26 wird gegenüber einer Anordnung der Zuschaltkupplung 64 an der Vorgelegewelle 46 axialer Bauraum eingespart. Ferner kann hierdurch die Position des Abtriebsflansches zur Hinterachse HA unverändert beibehalten werden. Zur Verbindung der Vorgelegewelle 46 mit der zweiten Antriebswelle 26 ist das separate Zahnrad 54 an der Vorgelegewelle 46 festgelegt. Es ist jedoch auch denkbar, den Abtrieb zur zweiten Antriebswelle 26 über einen beliebigen der Radsätze 48 des Stufenwechselgetriebes zu realisieren, sofern diese Radsätze ein Festrad aufweisen, das drehfest mit der Vorgelegewelle 46 verbunden ist (wie beispielsweise der in Fig. 1 mit 48 bezeichnete Radsatz).

Aufgrund der Beveloidverzahnung der Zahnräder 56, 58 ist lediglich ein Gleichlaufgelenk 27 zwischen der zweiten Antriebswelle 26 und dem Vorderachs-Querdifferential 28 notwendig. Auch in diesem Bereich kann gegebenenfalls ein Zahneingriff mit einem Achskreuzungswinkel im Bereich ± 90° vorgesehen sein, so dass in diesem Fall gar kein Gleichlaufgelenk mehr notwendig ist.

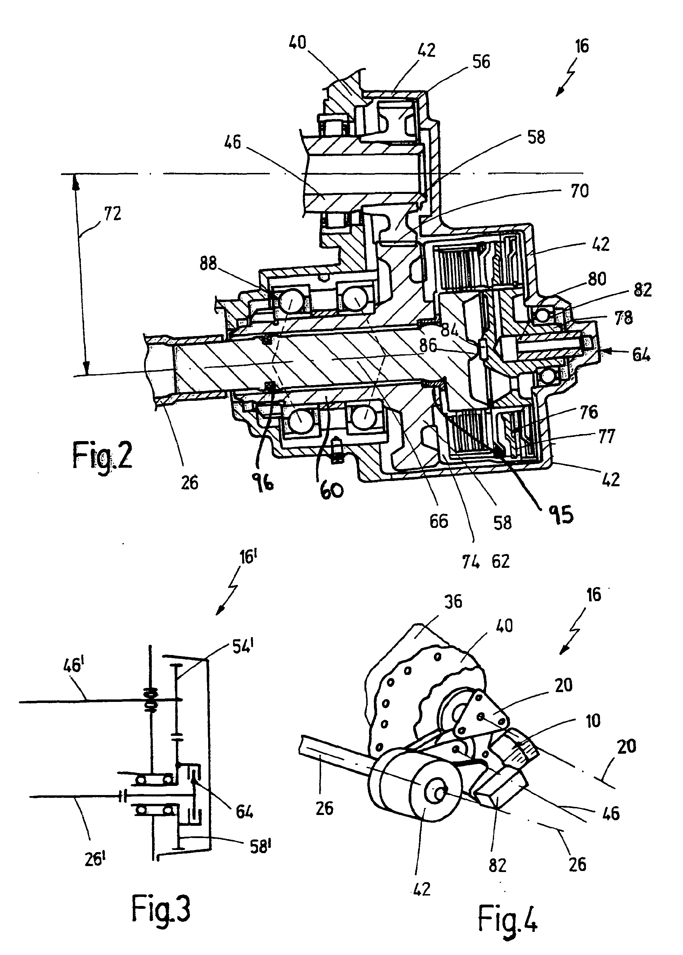

Fig. 2 zeigt eine konstruktive Ausführungsform des Abtriebsabschnittes des Stufenwechselgetriebes 16. Die in Fig. 2 dargestellte Konstruktion entspricht hinsichtlich Aufbau und Funktionsweise der schematischen Anordnung der Fig. 1. Gleiche Elemente sind daher mit gleichen Bezugszeichen versehen. Im Folgenden wird lediglich auf Unterschiede eingegangen.

So ist in Fig. 2 zu erkennen, dass die Verzahnung zwischen den Zahnrädern 56, 58 als Beveloidverzahnung 70 ausgebildet ist. Hierdurch wird zwischen der Vorgelegewelle 46 und der zweiten Antriebswelle 26 ein Winkel 72 von größer 0° eingerichtet.

Es ist ferner zu erkennen, dass ein Außenlamellenträger 74, der das Eingangsglied 62 bildet, drehfest mit dem Zahnrad 58 verbunden ist.

Auf der zur Hinterachse HA weisenden Seite der Zuschaltkupplung 64 ist eine Aktuatoranordnung 76 zur Betätigung der Zuschaltkupplung 64 angeordnet. Die Aktuatoranordnung 76 weist einen Druckkolben 77 auf, der beispielsweise hydraulisch betätigt wird und beispielsweise mit einer Fliehkraftausgleichseinrichtung ausgestattet sein kann.

Der Druckkolben 77 ist an einem Kolbenträger 78 festgelegt, der drehbar an dem Außendeckel 42 gelagert ist. Der Kolbenträger 78 wird zur Ansteuerung des Druckkolbens 77 über eine Drehdurchführung 80, die einen kleinen Durchmesser aufweist, mit Hydraulikfluid versorgt, die an dem Außendeckel 42 festgelegt ist.

Bei 82 ist eine erste Lageranordnung gezeigt, die zur Lagerung des Kolbenträgers 78 dient. Die erste Lageranordnung 82 ist im vorliegenden Fall durch ein einzelnes Wälzlager gebildet. An einer zur Vorderachse VA weisenden Seite des Kolbenträgers 78 ist eine Druckplatte 84 angeordnet, die als ein Axiallager für das als Wellenstummel ausgeführte Ausgangsglied 66 der Zuschaltkupplung 64 dient. An diesem Wellenstummel, der drehbar innerhalb der Zwischenwelle 60 gelagert ist, ist an der zum Axiallager 84 weisenden Seite ein etwa halbkugelförmiger Vorsprung vorgesehen, mittels dessen sich die Welle an dem Axiallager 84 abstützt. Hierdurch können veränderte Winkellagen des Wellenstummels ausgeglichen werden, die beispielsweise aufgrund von Fertigungstoleranzen auftreten können.

Eine zweite Lageranordnung zur Lagerung der Zwischenwelle 60 an dem Gehäusedeckel 40 ist bei 88 gezeigt. Die zweite Lageranordnung 88 ist durch zwei Schrägkugellager oder Kegelrollenlager in O-Anordnung realisiert, die gegeneinander definiert verspannt sind (angestellt sind).

Die Hydraulikversorgung der Drehdurchführung 80 und damit der Aktuatoranordnung 76 kann durch ein in das Getriebe integriertes Power-Pack-System realisiert werden, das beispielsweise einen Elektromotor und eine Pumpe oder eine verbrennungsmotorisch angetriebene Pumpe beinhaltet.

Bevorzugt ist jedoch ein externes Power-Pack-System, das beispielsweise an den Gehäusedeckel 40 oder den Außendeckel 42 angeflanscht sein kann.

In Fig. 3 ist eine alternative Ausführungsform eines Stufenwechselgetriebes 16' gezeigt, bei dem die Vorgelegewelle 46' und die zweite Antriebswelle 26' parallel zueinander ausgebildet sind. Der Radsatz 54' beinhaltet demzufolge keine Beveloidverzahnung, sondern eine reguläre Stirnradverzahnung (beispielsweise Schrägverzahnung).

In Fig. 4 ist gezeigt, dass sich mit der gezeigten Anordnung der Zuschaltkupplung 64 koaxial zu der zweiten Antriebswelle 26 eine kompakte Abtriebskonstruktion erzielen lässt. Der Außendeckel 42 ist radial relativ eng an der Abtriebswelle 20 angeordnet, stört diese jedoch nicht, so dass eine axial kompakte Bauweise realisierbar ist. Ferner ist an der Außenseite des Gehäusedeckels 40 eine elektrohydraulische Aktuatoransteuerung 90 in Form eines Elektromotors mit einer Hydraulikpumpe und mit einem Steuergerät 92 anbaubar, ohne die Packungsgröße wesentlich zu verändern.

Eine Pumpe zur Druckerzeugung wird dabei vorzugsweise elektromotorisch angetrieben und ist vorzugsweise als Spindelpumpe ausgebildet. Über die Ansteuerung des elektrischen Motors kann der gewünschte Druck dann vorzugsweise direkt eingestellt werden. Hierdurch lassen sich Hydraulikventile zur Drucksteuerung einsparen.

Die Kupplungsanordnung 14 weist vorzugsweise zwei nasse Lamellenkupplungen K1, K2 auf, die Kupplungen K1, K2 können jedoch auch als trockene Trennkupplungen ausgebildet sein. Im Falle von nassen Lamellenkupplungen ist eine gute Voraussetzung für eine funktionale Integration der Verteilereinrichtung in Form der hydraulisch betätigbaren Zuschaltkupplung geschaffen. Es kann ein vorhandenes Hydraulik-und/oder Elektronikmodul verwendet werden. Die Steuerung der Zuschaltkupplung 64 kann beispielsweise durch das Getriebesteuergerät übernommen werden.

Die Verbindung der zweiten Antriebswelle 26 mit dem Wellenstummel des Ausgangsgliedes 66 kann beispielsweise über ein Steckprofil erfolgen.

Anstelle der Verwendung einer Beveloidstufe für den Radsatz 54 der Fig. 1 kann auch ein herkömmlicher Radsatz verwendet werden, in welchem Fall dann beispielsweise ein Gleichlaufgelenk im Bereich des Wellenstummels 66 vorgesehen wird.

Das Ausgangsglied 66 ist, wie es insbesondere in Fig. 2 dargestellt ist, in einer Zentrierung 95 winkelbeweglich gelagert. Um die Bewegungsfreiheit zu gewährleisten, weist das Ausgangsglied 66 ferner ein gewisses Spiel in Bezug auf die Innenlamellen der Zuschaltkupplung 64 auf, beispielsweise durch die Ausbildung eines vergrößerten Zahnspiels bei einer Verbindung zu den Innenlamellen über ein Zahnwellenprofil. Ferner ist zwischen dem Ausgangsglied 66 und der Hohlwelle 60 eine Dichtung 96 mit einer vergrößerten radialen Beweglichkeit angeordnet.

## Patentansprüche

1. Allrad-Antriebsstrang (11) für ein Kraftfahrzeug (10), das wenigstens zwei angetriebene Achsen (HA, VA) aufweist, mit einem Kennungswandlungsgetriebe (16) in Längsbauweise, dem eingangsseitig Antriebsleistung zugeführt wird, das zur Umwandlung einer Charakteristik eines Antriebsmotors (12) dient und das ausgangsseitig mit einer Verteilereinrichtung (64) verbunden ist, mittels der die Antriebsleistung auf die zwei Achsen (HA, VA) verteilt werden kann, wobei das Kennungswandlergetriebe (16) eine Abtriebswelle (20), die mit einer ersten Antriebswelle (22) für die erste Achse verbunden ist, und eine hierzu parallele Vorgelegewelle (46) aufweist, wobei die Abtriebswelle (20) und die Vorgelegewelle (46) mittels einer ersten konstanten Übersetzung (52) miteinander verbunden sind, und wobei die Vorgelegewelle (46) mittels einer zweiten konstanten Übersetzung (54) mit einer zweiten Antriebswelle (26) für die zweite Achse (VA) verbunden ist,
**dadurch gekennzeichnet, dass**
die Verteilereinrichtung (64) koaxial zu der zweiten Antriebswelle (26) angeordnet ist.

2. Allrad-Antriebsstrang nach Anspruch 1, **dadurch gekennzeichnet, dass** die Verteilereinrichtung (64) dazu ausgelegt ist, Antriebsleistung immer zu einer ersten (HA) der zwei Achsen (HA, VA) und variabel mittels einer Zuschaltkupplung (64) zu der zweiten Achse (VA) zu übertragen, wobei die Zuschaltkupplung (64) koaxial zu der zweiten Antriebswelle (26) angeordnet ist.

3. Allrad-Antriebsstrang nach Anspruch 1 oder 2, **dadurch gekennzeichnet, dass** das Kennungswandlergetriebe (16) als Stufenwechselgetriebe (16) in Vorgelegebauweise ausgebildet ist, wobei die erste konstante Übersetzung durch einen ersten Abtriebskonstantenradsatz (52) des Stufenwechselgetriebes gebildet ist.

4. Allrad-Antriebsstrang nach Anspruch 2 oder 3, **dadurch gekennzeichnet, dass** die Zuschaltkupplung (64) ein Eingangsglied (62) aufweist, das mit einer Zwischenwelle (60) verbunden ist, die zu der zweiten Antriebswelle (26) konzentrisch ausgebildet ist, und ein Ausgangsglied (66) aufweist, das mit der zweiten Antriebswelle (26) verbunden ist.

5. Allrad-Antriebsstrang nach Anspruch 4, **dadurch gekennzeichnet, dass** die Zwischenwelle (60) als Hohlwelle (60) ausgebildet ist.

6. Allrad-Antriebsstrang nach einem der Ansprüche 1 - 5, **dadurch gekennzeichnet, dass** die zweite konstante Übersetzung durch einen zweiten Abtriebskonstantenradsatz (54) gebildet ist.

7. Allrad-Antriebsstrang nach Anspruch 6, **dadurch gekennzeichnet, dass** der zweite Abtriebskonstantenradsatz (54) wenigstens ein Beveloidrad aufweist, so dass die zweite Antriebswelle (26) schräg zu der Vorgelegewelle (46) angeordnet sein kann.

8. Allrad-Antriebsstrang nach einem der Ansprüche 1 - 7, **dadurch gekennzeichnet, dass** die erste und die zweite Übersetzung gleich groß sind.

9. Allrad-Antriebsstrang nach einem der Ansprüche 1 - 8, **dadurch gekennzeichnet, dass** Mittel (54) zur Einrichtung der zweiten Übersetzung und/oder die Verteilereinrichtung (64) in einem Gehäuse (32) des Kennungswandlergetriebes (16) aufgenommen sind.

10. Allrad-Antriebsstrang nach Anspruch 9, **dadurch gekennzeichnet, dass** die Mittel (54) zur Einrichtung der zweiten Übersetzung in einem zur ersten Achse (HA) weisenden Deckel (40, 42) des Gehäuses (32) des Kennungswandlergetriebes (16) aufgenommen sind.

11. Allrad-Antriebsstrang nach einem der Ansprüche 1 - 10, **dadurch gekennzeichnet, dass** Aktuatormittel (76) zur Betätigung der Verteilereinrichtung (64) sich an einem zur ersten Achse (HA) weisenden Deckel (40, 42) eines Gehäuses (32) des Kennungswandlergetriebes (16) abstützen.

12. Allrad-Antriebsstrang nach einem der Ansprüche 1-11, **dadurch gekennzeichnet, dass** die zweite Antriebswelle (26) außerhalb eines Gehäuses (32) des Kennungswandlergetriebes (16) verläuft.

13. Allrad-Antriebsstrang nach Anspruch 12, **dadurch gekennzeichnet, dass** die zweite Achse (VA) ein Querdifferential (28) zur Verteilung der Antriebsleistung auf zwei Räder (VL, VR) der zweiten Achse (VA) aufweist, das mit der zweiten Antriebswelle (26) verbunden ist, wobei das Querdifferential (28) ein von dem Gehäuse (32) des Kennungswandlergetriebes (16) getrenntes Gehäuse (34) aufweist und wobei die Gehäuse (32, 34) gemeinsam an einem Chassis (30) des Kraftfahrzeuges (10) festgelegt sind.

14. Allrad-Antriebsstrang nach einem der Ansprüche 1 - 13, **dadurch gekennzeichnet, dass** die zweite Antriebswelle (26) oder eine damit verbundene Zwischenwelle (60) an ihrem der Verteilereinrichtung (64) zugeordneten Ende einen rundlichen Vorsprung (86) aufweist, mittels dessen sich die zweite Antriebswelle (26) axial in Bezug auf ein Gehäuse (32, 40, 42) der Verteilereinrichtung (64) abstützt.

15. Allrad-Antriebsstrang nach einem der Ansprüche 1 - 14, **dadurch gekennzeichnet, dass** die zweite Antriebswelle (26) oder eine damit verbundene Zwischenwelle (60) durch ein Zentrierlager (95) winkelbeweglich zentriert ist.
